(19) Europäisches Patentamt
European Patent Office
Office européen des brevets

(11) EP 3 220 458 A1

(12) EUROPEAN PATENT APPLICATION

(43) Date of publication:
20.09.2017 Bulletin 2017/38

(51) Int Cl.:
H01M 4/485 (2010.01)
H01M 4/62 (2006.01)
H01M 4/02 (2006.01)
H01M 4/58 (2010.01)
H01M 4/36 (2006.01)

(21) Application number: 17154358.0

(22) Date of filing: 02.02.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 15.03.2016 JP 2016051373

(71) Applicant: Kabushiki Kaisha Toshiba
Tokyo
105-8001 (JP)

(72) Inventors:
• Yasuda, Kazuhiro
Tokyo, 105-8001 (JP)
• Yamashita, Yasunobu
Tokyo, 105-8001 (JP)
• Hoshina, Keigo
Tokyo, 105-8001 (JP)
• Isozaki, Yoshiyuki
Tokyo, 105-8001 (JP)
• Takami, Norio
Tokyo, 105-8001 (JP)

(74) Representative: Hoffmann Eitle
Patent- und Rechtsanwälte PartmbB
Arabellastraße 30
81925 München (DE)

(54) NONAQUEOUS ELECTROLYTE BATTERY, BATTERY PACK, AND VEHICLE

(57) According to one embodiment, a nonaqueous electrolyte battery (10) is provided. This nonaqueous electrolyte battery (10) includes a negative electrode (3). The negative electrode (3) includes a negative electrode active material including a titanium oxide, and has a coating that coats at least a portion of a surface of the negative electrode (3). The coating includes fluorine atoms, organic atoms and metal atoms.

FIG.3

(Cont. next page)

F I G. 7

**Description**

FIELD

Embodiments of the present invention relate to a nonaqueous electrolyte battery, a battery pack, and a vehicle.

BACKGROUND

In recent years, nonaqueous electrolyte batteries such as lithium ion secondary batteries have been developed as high-energy density batteries. Nonaqueous electrolyte batteries are expected as power sources for vehicles such as hybrid automobiles and electric automobiles, and as large-size power sources for electric storage. In particular, for the application for vehicles, nonaqueous electrolyte batteries are required to have other characteristics such as rapid charge-discharge performance and long-term reliability. Nonaqueous electrolyte batteries capable of rapid charge and discharge have the advantage of a very short charging time, and can improve vehicle performance in hybrid automobiles and further efficiently recover regenerative energy for use as power.

The rapid charge and discharge are made possible by rapid movements of electrons and lithium ions between positive electrodes and negative electrodes. However, in batteries that use carbon-based negative electrodes including carbonaceous materials, repeated rapid charge and discharge may deposit dendrites of metal lithium on the electrodes. These dendrites can cause internal short-circuits, thereby resulting in heat generation and ignition.

Therefore, batteries have been developed which use, as negative electrode active materials, metal composite oxides in place of the carbonaceous materials. In particular, batteries that use titanium oxides as negative electrode active materials are capable of stable rapid charge and discharge, and also have longer lifetimes as compared with carbon-based negative electrodes.

However, such titanium oxides have higher (nobler) potentials with respect to metal lithium as compared with carbonaceous materials. Moreover, the titanium oxides are low in capacity per mass. For these reasons, batteries using these titanium oxides have the problem of being low in energy density.

For example, the electrode potential of titanium oxide is approximately 1.5 V on the basis of metal lithium, and higher (nobler) as compared with the potentials of carbon-based negative electrodes. The potential of the titanium oxide is derived from a redox reaction between $Ti^{3+}$ and $Ti^{4+}$ in the electrochemical insertion and extraction of lithium, and thus electrochemically restricted. In addition, rapid lithium ion charging and discharging can be achieved in a stable manner at a high electrode potential on the order of 1.5 V. Therefore, it is substantially difficult to lower the electrode potential in order to improve the energy density.

On the other hand, as for the capacity per unit mass, lithium-titanium composite oxides such as $Li_4Ti_5O_{12}$(LTO) have a theoretical capacity of around 175 mAh/g. On the other hand, common carbon-based electrode materials have a theoretical capacity of 372 mAh/g. Accordingly, titanium oxides are significantly lower in capacity density as compared with carbon-based negative electrodes. This is because the crystal structures of the titanium oxides have therein small numbers of sites in which lithium can be inserted, or lithium is easily stabilized in the structures, thus decreasing the substantial capacity.

In view of the foregoing, novel materials have been developed. For example, titanium-based oxides that have a monoclinic beta structure and lithium-titanium based oxides have been attracting attention, because of their high theoretical capacity of 335 mAh/g.

The use of, as a negative electrode active material, a titanium-based oxide ($TiO_2$ (B)) that has a monoclinic β-type structure results in a relatively high cell voltage dependency in a state of charge (SOC: state of charge). Therefore, the use has the advantage of facilitating the cell voltage management based on the SOC. However, when a battery that uses the $TiO_2$ (B) for a negative electrode is subjected to a charge-and-discharge cycle, there is a problem that the SOC will be shifted due to side reactions of the negative electrode, thereby gradually decreasing the capacity. In addition, there is a problem that gases will be generated in the cell due to side reactions of the negative electrode, thereby causing cell swell.

BRIEF DESCRIPTION OF THE DRAWINGS

FIG. 1 shows an example of a nonaqueous electrolyte battery according to a first embodiment;
FIG. 2 shows an enlarged cross-sectional view of an A part in FIG. 1;
FIG. 3 shows a partially cutaway perspective view schematically illustrating another example of the nonaqueous electrolyte battery according to the first embodiment;
FIG. 4 shows an enlarged cross-sectional view of a B part in FIG. 3;

FIG. 5 shows an exploded perspective view illustrating an example of a battery pack according to a second embodiment;

FIG. 6 shows a block diagram illustrating an electrical circuit of the battery pack in FIG. 5;

FIG. 7 shows spectrum data of an F1S peak obtained by XPS (X-ray Photoelectron Spectroscopy; XPS) according to Example 1;

FIG. 8 shows spectrum data of an F1S peak obtained by XPS according to Comparative Example 1;

FIG. 9 shows spectrum data of an O1S peak obtained by XPS according to Example 1;

FIG. 10 shows spectrum data of an O1S peak obtained by XPS according to Comparative Example 1; and

FIG. 11 shows an example of a vehicle according to a third embodiment.

DETAILED DESCRIPTION

According to a first embodiment, a nonaqueous electrolyte battery is provided. This nonaqueous electrolyte battery includes a positive electrode, a negative electrode, and a nonaqueous electrolyte. The negative electrode includes a negative electrode active material including a titanium oxide, and has a coating that coats at least a portion of a surface of the negative electrode. The coating includes fluorine atoms, organic atoms and metal atoms, and satisfies the following formula (1).

$$0.2 \leq F1/F2 \leq 0.8 \ldots (1)$$

In the formula (1), F1 represents a proportion (%) of an integrated intensity of a peak F1 derived from an amount of the fluorine atoms bonded to the organic atoms according to X-ray photoelectron spectroscopy to an integrated intensity of a peak F1S derived from a whole amount of the fluorine atoms according to the X-ray photoelectron spectroscopy, and F2 represents a proportion (%) of an integrated intensity of a peak F2 derived from an amount of the fluorine atoms bonded to the metal atoms according to the X-ray photoelectron spectroscopy to the integrated intensity of the peak F1S.

According to a second embodiment, a battery pack is provided. This battery pack includes the nonaqueous electrolyte battery according to the first embodiment.

According to a third embodiment, a vehicle is provided. This vehicle includes the battery pack according to the second embodiment.

Embodiments are explained below referring to drawings. In the following descriptions, the same reference number is applied to structural features having the same or similar function throughout all drawings, and overlapped explanations are omitted. Each drawing is a schematic view for explaining the embodiment and promoting the understanding thereof. Shapes, sizes and ratios in the drawing, accordingly, may be different from those in a practical apparatus, but they may be appropriately designed and changed considering the following descriptions and known technology.

(First Embodiment)

According to the present embodiment, a nonaqueous electrolyte battery is provided. This nonaqueous electrolyte battery includes a positive electrode, a negative electrode, and a nonaqueous electrolyte. The negative electrode includes a negative electrode active material including a titanium oxide, and has a coating that coats at least a portion of a surface of the negative electrode. The coating includes fluorine atoms, organic atoms and metal atoms, and satisfies the following formula (1).

$$0.2 \leq F1/F2 \leq 0.8 \ldots (1)$$

In the formula (1), F1 represents a proportion (%) of an integrated intensity of a peak F1 derived from an amount of the fluorine atoms bonded to the organic atoms according to X-ray photoelectron spectroscopy to an integrated intensity of a peak F1S derived from a whole amount of the fluorine atoms according to the X-ray photoelectron spectroscopy, and F2 represents a proportion (%) of an integrated intensity of a peak F2 derived from an amount of the fluorine atoms bonded to the metal atoms according to the X-ray photoelectron spectroscopy to the integrated intensity of the peak F1S.

When the nonaqueous electrolyte battery is charged or discharged, lithium extracted from the positive electrode when the battery is charged can develop a side reaction with the nonaqueous electrolyte. When the side reaction is developed, lithium to be inserted in the negative electrode is consumed by the side reaction, thereby resulting in failure to insert an appropriate amount of lithium in the negative electrode. In this way, the battery reaches a condition where only charges flow from the positive electrode toward the negative electrode. In this condition, the charging excessively increases the potential of the positive electrode, thus causing the battery voltage to reach a predetermined voltage before full charge, and the charging is then finished. In summary, when the side reaction is developed at the interface between the negative electrode and the nonaqueous electrolyte, the battery undergoes a decrease in capacity.

However, a coating produced by the side reaction can inhibit further side reactions. The inventors have found that the negative electrode surface has a coating that has a specific constituent, thereby making it possible to suppress the decrease in capacity as mentioned above, and further also suppress cell swell caused by gases that can be generated by side reactions.

More specifically, the nonaqueous electrolyte battery according to the present embodiment includes the following composition. The negative electrode includes the negative electrode active material including a titanium oxide. Due to the negative electrode active material including the titanium oxide, the cell voltage dependency based on the SOC is relatively increased. More specifically, the SOC is made more likely to change depending on the cell voltage. Therefore, controlling the cell voltage makes it easy to manage the SOC.

The negative electrode surface of the nonaqueous electrolyte battery is at least partially coated with the coating, and this coating includes fluorine atoms. This coating satisfies the following formula (1).

$$0.2 \leq F1/F2 \leq 0.8 \ ... \ (1)$$

In the formula (1), F1 represents a proportion (%) of an integrated intensity of a peak F1 derived from an amount of the fluorine atoms bonded to the organic atoms according to X-ray photoelectron spectroscopy to an integrated intensity of a peak F1S derived from a whole amount of the fluorine atoms according to the X-ray photoelectron spectroscopy, and F2 represents a proportion (%) of an integrated intensity of a peak F2 derived from an amount of the fluorine atoms bonded to the metal atoms according to the X-ray photoelectron spectroscopy to the integrated intensity of the peak F1S.

At least a portion of the negative electrode surface is coated with the coating mentioned above, thereby inhibiting the side reaction at the interface between the negative electrode and the nonaqueous electrolyte, and then making it possible suppress the decrease in capacity when charge and discharge are repeated. In this regard, in the case of a coating that satisfies the formula (1) mentioned above, the coating is formed strongly due to a relatively large content of metal fluoride included in the coating. Therefore, this is believed to be because, even in the case of battery usage environments at high temperatures (45°C or higher), the coating has the effect of undergoing less degradation with the frequency of charge and discharge. In addition, cell swell can be suppressed which is caused by gases generated by side reactions.

When the ratio F1/F2 is 0.2 or more, a sufficient amount of coating is formed in order to inhibit the side reaction. When the ratio F1/F2 exceeds 0.8, the coating formed for the negative electrode is possibly excessively thick. In order to keep the battery resistance from being increased, and in order to keep discharge capacity and output characteristics of the battery from being decreased, the ratio F1/F2 is 0.8 or less. The ratio F1/F2 more preferably falls within the range of 0.3 to 0.7.

It is possible to analyze which atom the fluorine atoms included in the coating are bonded to, for example, through measurement by X-ray photoelectron spectroscopy (XPS) as described below.

<Measurement by X-ray Photoelectron Spectroscopy (XPS)>

The negative electrode put into a state of discharge in accordance with the following procedure is subjected to measurement by the X-ray photoelectron spectroscopy. In this regard, the state of discharge means, in the case of a battery, a state after discharging the battery in accordance with the recommended charge-and-discharge specifications of the battery. However, the state of discharge of the battery herein encompasses states where the SOC of the battery falls within the range of 0% to 30%. In the case of putting a battery into the state of discharge, an unused battery is used.

In the case of removing the negative electrode for discharge, the state of discharge means a state after discharge as follows. First, the negative electrode removed from the battery is cleaned with, for example, a chain carbonate solvent such as ethylmethyl carbonate, to remove a Li salt, etc., and then dried. Next, a three-electrode electrochemical cell is created with the use of the dried negative electrode as a working electrode, and a lithium metal as a counter electrode and a reference electrode. In this regard, an electrolyte for the three-electrode electrochemical cell is not particularly limited, and for example, a solution in which 1 mol/L lithium hexafluorophosphate (LiPF$_6$) is dissolved in a mixed solvent of ethylene carbonate and methylethyl carbonate of 1 : 1 in volume ratio may be used.

The thus prepared cell is charged until the potential of the working electrode reaches 3.0 V (vs Li/Li$^+$). Thereafter, this cell is discharged until the potential of the working electrode reaches 1.4 V (vs Li/Li$^+$), and the electrical capacitance C [mAh] in this case is measured. Next, the cell is charged until the potential of the working electrode reaches 2.0 V to 2.5 V (vs Li/Li$^+$). It is to be noted that the value of an electric current that is applied when the SOC is adjusted to be within the range of 0.1C to 1C.

The negative electrode put into the state of discharge in accordance with the procedure described above can be subjected to measurement by XPS as explained below. For a system for use in this measurement, ESCA 300 from SCIENTA, or a system that has a function equivalent to ESCA 300 can be used. The Al-K$\alpha$ line by single-crystal spectroscopy (1486.6 eV) is used for an excited X-ray source. The X-ray output is adjusted to 4 kW (13 kV × 310 mA), the photoelectron detection angle is adjusted to 90°, and the analysis area is adjusted to approximately 4 mm × 0.2 mm.

The negative electrode put into the state of discharge is removed in an argon atmosphere, and cleaned with, for example, methylethyl carbonate to remove a Li salt attached to the negative electrode surface. The negative electrode with the Li salt removed therefrom is dried, and then placed in a sample holder. The sample is loaded under an inert atmosphere, for example, a nitrogen atmosphere. Scanning is executed at 0.10 eV/step.

In a spectrum obtained through measurement of the negative electrode according to the present embodiment by XPS, F1S peaks are peaks that appear at 680 eV to 691 eV. The F1S can be sorted by an after-mentioned method into a F2 peak that appears at 682 eV to 689 eV and a F1 peak that appears at 684 eV to 690 eV. The F1 peak is a peak derived from an amount (atomic%) of fluorine atom bonded to an organic atom. The organic atom may be, for example, carbon or phosphorus. In addition, the F2 peak is a peak derived from an amount (atomic%) of fluorine atom bonded to a metal atom. It is to be noted that the fluorine bonded to the metal atom is identified as a fluoride ion (F$^-$) in the measurement by XPS.

In addition, the coating according to the present embodiment desirably includes oxygen atoms. In this case, when this coating is subjected to the measurement by XPS, O1S peaks appear at positions of 528 eV to 538 eV. This O1S can be also sorted, as with the F1S peak, by the after-mentioned method into an O1 peak that appears at 528 eV to 538 eV and an 02 peak that appears at 528 eV to 532 eV. The 01 peak is a peak derived from an amount (atomic%) of oxygen atom bonded to an organic atom. In addition, the 02 peak is a peak derived from an amount(atomic%) of oxygen atom bonded to a metal atom.

Furthermore, the O1 peak can be divided into an O1-A peak that is a peak on a lower binding energy side and an O1-B peak that is a peak on a higher binding energy side. Specifically, the O1 peak can be divided into the 01-A peak that appears at 532 ± 0.5 eV and the O1-B peak that appears at 533 ± 0.5 eV. The reason that the 01 peak is divided into the two peaks will be described below. The 01 peak is a peak derived from oxygen atoms bonded to organic elements in various bonding forms. Accordingly, the 01-A peak or the O1-B peak is also a peak derived from oxygen atoms bonded to organic elements in various bonding forms. Therefore, it is difficult to identify what atom the oxygen atom corresponding to the O1-A peak or the O1-B peak is bonded to. However, to observe changes in the peak shape of the 01 peak into the peak shapes of the 01-A peak and the O1-B peak, the O1 peak is divided into the two peaks.

The F1 peak, F2 peak, 01-A peak, O1-B peak, and 02 peak mentioned above respectively have main peaks at a position of 687.5 eV to 688.2 eV, a position of 685.7 eV to 686 eV, a position of 531.8 eV to 532.5 eV, a position of 533.5 eV, and a position of 530.2 eV to 530.4 eV, and respectively have half widths of 2.1 eV to 2.3 eV, 2.1 eV to 2.3 eV, 2.3 eV to 2.4 eV, 2.3 eV to 2.4 eV, and 1.4 eV to 1.6 eV. These peaks mean intensities allocated by approximation at Gauss curve : Lorenz curve = 90 : 10, and measurement spectral fitting.

The coating according to the present embodiment preferably satisfies the following formula (2).

$$1 \leq O1A/O1B \ ... \ (2)$$

In the formula (2), O1A represents a proportion (%) of an integrated intensity of a peak O1A at 532 ± 0.5 eV in the X-ray photoelectron spectroscopy to an integrated intensity of a peak 01 derived from a whole amount of the oxygen atoms bonded to the organic atoms according to the X-ray photoelectron spectroscopy, and 01B represents a proportion (%) of an integrated intensity of a peak 01B at 533 ± 0.5 eV in the X-ray photoelectron spectroscopy to the integrated intensity of the peak O1.

The ratio O1A/O1B is preferably 1.05 or more, more preferably 1.1 or more. When the ratio O1A/O1B has such a numerical value, there is a tendency to effectively suppress the decrease in battery capacity.

In addition, the coating according to the present embodiment preferably satisfies the following formula (3).

$$3.5 \leq O1/O2 \ ... \ (3)$$

In the formula (3), 01 represents a proportion (%) of an integrated intensity of a peak O1 derived from an amount of the oxygen atoms bonded to the organic atoms according to the X-ray photoelectron spectroscopy to an integrated intensity of a peak O1S derived from an whole amount of oxygen atoms according to the X-ray photoelectron spectroscopy, and 02 represents a proportion (%) of an integrated intensity of a peak 02 derived from an amount of the oxygen atoms bonded to the metal atoms according to the X-ray photoelectron spectroscopy to the integrated intensity of the peak 01S.

The ratio O1/02 is preferably 4 or more, more preferably 4.5 or more. When the ratio O1/02 has such a numerical value, there is a tendency to effectively suppress the decrease in battery capacity.

Subsequently, the nonaqueous electrolyte battery according to the present embodiment will be described in more detail.

The nonaqueous electrolyte battery according to the present embodiment includes the positive electrode, the negative electrode, and the nonaqueous electrolyte. The nonaqueous electrolyte battery may further include a separator, a container member, a positive electrode terminal, and a negative electrode terminal.

The positive electrode and the negative electrode can constitute an electrode group with a separator interposed therebetween. The nonaqueous electrolyte can be held in the electrode group. The container member can house the electrode group and the nonaqueous electrolyte. The positive electrode terminal can be electrically connected to the positive electrode. The negative electrode terminal can be electrically connected to the negative electrode.

The positive electrode, the negative electrode, the nonaqueous electrolyte, the separator, the container member, the positive electrode terminal, and the negative electrode terminal will be described in detail below.

1) Positive Electrode

The positive electrode includes a positive electrode current collector, and a positive electrode active material-containing layer including active material particles, a conductive agent, and a binder, which is supported on one or both sides of the positive electrode current collector.

The positive electrode current collector is preferably aluminum foil, or aluminum alloy foil containing at least one element selected from Mg, Ti, Zn, Mn, Fe, Cu, and Si. The aluminum foil and the aluminum alloy foil are preferably 50 $\mu$m or less in average crystal particle size. This average crystal particle size is more preferably 30 $\mu$m or less, further preferably 5 $\mu$m or less. The average crystal particle size of 50 $\mu$m or less can dramatically increase the strength of the aluminum foil or the aluminum alloy foil. This results in allowing the positive electrode to undergo an increase in density at high pressing pressure, and thus allowing the battery capacity to be increased.

The average crystal particle size is obtained as follows. The surface texture of the current collector is subjected to texture observation with an optical microscope, thereby finding the number n of crystal particles present in 1 mm x 1 mm. The average crystal particle area S is obtained from S = 1 x $10^6$/n ($\mu$m$^2$) with the use of the number n. From the obtained value of S, the average crystal particle size d ($\mu$m) is calculated in accordance with the following formula (A).

$$d = 2(S/\pi)^{1/2} \qquad (A)$$

The average crystal particle sizes of the aluminum foil and aluminum alloy foil vary under the complex influence of multiple factors such as material textures, impurities, processing conditions, heat treatment history, and annealing conditions. It is possible to adjust the crystal particle size by combining the previously mentioned factors in the manufacturing process of the current collector.

The aluminum foil and the aluminum alloy foil are, for example, 20 $\mu$m or less, more preferably 15 $\mu$m in thickness. The aluminum foil preferably has a purity of 99 weight% or more. An alloy containing an element such as magnesium, zinc, and silicon is preferred as the aluminum alloy. On the other hand, the content of a transition metal such as iron, copper, nickel, and chromium is preferably 1% or less.

The positive electrode active material preferably includes a phosphate compound that has an olivine structure. The phosphate compound that has an olivine structure is, for example, a compound represented by $Li_xFePO_4$, $Li_xFe_{1-y}MnyPO_4$, or $Li_xCoPO_4$ ($0 \leq x \leq 1$, $0 \leq y \leq 1$). When the positive electrode active material includes the phosphate compound that has an olivine structure, the positive electrode active material has a stable crystal structure, and thus has the effect of being capable of effectively suppressing explosions and combustion of conventional batteries due to internal short-circuits and the like, which are caused in the batteries.

It is to be noted that it is difficult to manage, with a battery voltage, the SOC of a battery that includes a positive electrode including the positive electrode active material and a negative electrode including a lithium-titanium oxide (Li4Ti5O12, LTO). This is because the phosphate compound that has an olivine structure and the LTO are charged and discharged by lithium ions at a region with a flat voltage, that is, a two-phase coexistence region, in the charge voltage curve and the discharge voltage curve. The range of SOC provided with the region is large. However, when the positive electrode includes the phosphate compound that has an olivine structure, and when the negative electrode includes $TiO_2$ (B), the battery including the negative electrode includes no two-phase coexistent region in the battery voltage curve. Therefore, in this case, it is easy to manage the SOC of the battery with a battery voltage.

The positive electrode active material may include other positive electrode active materials, other than the phosphate compound that has an olivine structure. The proportion of the phosphate compound that has an olivine structure to the total amount of the positive electrode active materials is preferably 60 mass% or more.

As the other positive electrode active materials, compounds can be used which are selected from, for example, manganese dioxides ($MnO_2$), iron oxides, copper oxides, and nickel oxides, as well as lithium-manganese composite oxides (for example, $Li_xMn_{2-y}M_yO_4$ or $Li_xMn_{1-y}M_yO_2$), lithium-nickel composite oxides (for example, $Li_xNi_{1-x}M_yO_2$), lithium-cobalt composite oxides ($Li_xCo_{1-y}M_yO_2$), lithium-nickel-cobalt composite oxides (for example, $Li_xNi_{1-y-z}CO_yM_zO_2$), lithium-manganese-cobalt composite oxides (for example, $Li_xMn_{1-y-z}CO_yM_zO_2$), lithium-manganese-nickel composite oxides (for example, $Li_xMn_aNi_bM_cO_2$ (a + b + c = 1), for example, $Li_xMn_{1/3}Ni_{1/3}Co_{1/3}O_2$, $Li_xMn_{1/2}Ni_{1/2}O_2$), spinel-type lithium-manganese-nickel composite oxides ($Li_xMn_{2-y}Ni_yO_4$), lithium-nickel-cobalt-manganese composite oxides, iron sulfates ($Fe_2(SO_4)_3$), and vanadium oxides (for example, $V_2O_5$), which allow lithium ions to be inserted therein and extracted therefrom. As the other positive electrode active material, these compounds may be used singly, or multiple compounds may be used in combination.

It is to be noted that when the compounds mentioned above are not particularly defined, x, y, and z preferably fall respectively within the ranges of 0 to 1.2, 0 to 0.5, and 0 to 0.1. In addition, M represents at least one element selected from the group consisting of Co, Mn, Ni, Al, Cr, Fe, Mg, Zn, Zr, Sn, Cu, and Fe.

The other positive electrode active materials preferably have at least one selected from the group consisting of lithium-manganese composite oxides, lithium-nickel composite oxides, lithium-cobalt composite oxides, lithium-nickel-cobalt composite oxides, lithium-manganese-nickel composite oxides, spinel-type lithium-manganese-nickel composite oxides, and lithium-manganese-cobalt composite oxides. The use of the foregoing compounds as the other positive electrode active materials can achieve a high battery voltage.

For example, conductive polymer materials such as polyaniline and polypyrrole, or disulfide-based polymer materials can be used for the polymers. Sulfur (S) and carbon fluoride can be also used as the active material.

The positive electrode active material preferably has a BET specific surface area of 0.1 $m^2$/g to 10 $m^2$/g. The positive electrode active material with a specific surface area of 0.1 $m^2$/g or more can sufficiently ensure insertion and extraction sites for lithium ions. The positive electrode active material with a specific surface area of 10 $m^2$/g or less is easily handled for industrial production, and can ensure favorable charge-and-discharge cycle performance.

The BET specific surface area can be measured, for example, by a method as explained below.

The mass of the active material is adjusted to 4 g. As a cell for evaluation, for example, a cell of 1/2 inches is used. As a pretreatment method, the cell for evaluation is subjected to drying under reduced pressure for 15 hours at a temperature of approximately 100°C or higher, thereby carrying out a degassing treatment. For example, TriStar II 3020 from Shimdzu-Micromeritics is used as the measurement system. While changing the pressure, a nitrogen gas is adsorbed, thereby providing an adsorption isotherm where the horizontal axis indicates a relative pressure, whereas the vertical axis indicates the amount of $N_2$ gas adsorption. While this curve is presumed to be based on the BET theory, the formula of BET can be applied to calculate the specific surface area.

The conductive agent is combined, if necessary, in order to enhance the current collecting performance, and reduce the contact resistance between the active material and the current collector. Examples of the conductive agent include carbonaceous substances such as acetylene black, Ketjen black, graphite and/or coke.

For example, polytetrafluoroethylene (PTFE), polyvinylidene fluoride (PVdF), a cellulosic member, for example, sodium carboxymethyl cellulose (CMC), a fluorine-containing rubber or a styrene-butadiene rubber can be, without limitation thereto, used as the binder.

The positive electrode active material, the conductive agent, and the binder are preferably combined respectively in proportions of: 73 mass% to 95 mass%; 3 mass% to 20 mass%; and 2 mass% to 7 mass%. The amount of the conductive agent is adjusted to 3 mass% or more, thereby making it possible to achieve the effect described above. The amount of the conductive agent, adjusted to 20 mass% or less, can reduce the decomposition of the nonaqueous electrolyte at the surface of the conductive agent under high-temperature storage. The amount of the binder is adjusted to 2 mass% or more, thereby providing sufficient electrode strength. The amount of the binder, adjusted to 7 mass% or less can reduce the amount of the binder combined as an insulating material in the electrode, and reduce the internal resistance.

The positive electrode can be prepared, for example, as follows. First, the positive electrode active material, conductive agent, and binder described above are prepared. Next, these are suspended in an appropriate solvent, and the suspension is applied to a current collector such as aluminum foil, and dried. The current collector with the suspension dried is subjected to pressing, thereby preparing the positive electrode. The obtained positive electrode is, for example, a strip-shaped electrode.

2) Negative Electrode

The negative electrode includes a negative electrode current collector, and a negative electrode active material-containing layer including active material particles, a conductive agent, and a binder, which is supported on one or both sides of the negative electrode current collector.

The negative electrode current collector is preferably aluminum foil, or aluminum alloy foil containing at least one element selected from Mg, Ti, Zn, Mn, Fe, Cu, and Si. The aluminum foil and the aluminum alloy foil are preferably 50 $\mu$m or less in average crystal particle size. This size can dramatically increase the strength of the current collector, thus resulting in allowing the negative electrode to undergo an increase in density at high pressing pressure, and thus allowing the battery capacity to be increased. In addition, degradation due to dissolution and corrosion of the negative electrode current collector can be prevented in over-discharge cycles under high-temperature environments (40°C or higher), and the impedance of the negative electrode can be thus kept from being increased. Furthermore, output characteristics, rapid charge, and charge-and-discharge cycle characteristics can be also improved. A more preferred range of the average crystal particle size in the negative electrode current collector is 30 $\mu$m or less, and a further preferred range thereof is 5 $\mu$m or less.

The foregoing average crystal particle size of the aluminum foil or aluminum alloy foil is affected complexly by many factors such as material compositions, impurities, processing conditions, heat treatment history, and heating conditions for annealing. The average crystal particle size (diameter) of the aluminum foil or aluminum alloy foil can be adjusted to 50 $\mu$m or less by combining the foregoing factors in the manufacturing process.

The aluminum foil and the aluminum alloy foil are 20 $\mu$m or less, more preferably 15 $\mu$m in thickness. The aluminum foil preferably has a purity of 99 mass% or more. The aluminum alloy is preferably an alloy containing an element such as magnesium, zinc, and silicon. On the other hand, the content of a transition metal such as iron, copper, nickel, and chromium is preferably 1 mass% or less.

The negative electrode active material includes a titanium oxide. The titanium oxide is not to be considered particularly limited, but for example, spinel-type lithium titanate, ramsdellite-type lithium titanate, titanium-niobium composite oxides, titanium-containing metal composite oxides, niobium oxide and composite oxides thereof, titanium dioxides that have a monoclinic crystal structure ($TiO_2$ (B)), and anatase-type titanium dioxides can be used. When $TiO_2$ (B) and/or $TiNb_2O_7$ are used among these oxides, the cell voltage dependency of the SOC is increased, and the control of the cell voltage thus makes it easy to manage the SOC. Furthermore, when $TiO_2$ (B) and/or $TiNb_2O_7$ are used, a battery that has a high energy density can be prepared, which is preferred.

The spinel-type lithium titanates include $Li_{4+x}Ti_5O_{12}$ (x varies in the range of $-1 \leq x \leq 3$ depending on charge and discharge reactions). The ramsdellite-type lithium titanates include $Li_{2+y}Ti_3O_7$ (y varies in the range of $-1 \leq y \leq 3$ depending on charge and discharge reactions). The $TiO_2$ (B) and the anatase-type titanium dioxides include $Li_{1+z}TiO_2$ (z varies in the range of $-1 \leq z \leq 0$ depending on charge and discharge reactions).

The titanium-niobium composite oxides include, for example, a group of compounds represented by $Li_xTi_{1-y}M1_yNb_{2-z}M2_zO_7$. In this regard, x is a value that varies in the range of $0 \leq x \leq 5$ depending on charge and discharge reactions. In addition, M1 is at least one selected from the group consisting of Zr, Si and Sn, M2 is at least one selected from the group consisting of V, Ta, and Bi, y is a value that satisfies $0 \leq y < 1$, and z is a value that satisfies $0 \leq z \leq 2$.

The titanium-containing metal composite oxides include metal composite oxides containing Ti and at least one element selected from the group consisting of P, V, Sn, Cu, Ni, and Fe. The metal composite oxides containing Ti and at least one element selected from the group consisting of P, V, Sn, Cu, Ni, and Fe include, for example, $TiO_2$-$P_2O_5$, $TiO_2$-$V_2O_5$, $TiO_2$-$P_2O_5$-$SnO_2$, and $TiO_2$-$P_2O_5$-MeO (Me is at least one element selected from the group consisting of Cu, Ni, and Fe).

The foregoing metal composite oxides preferably have low crystallinity, and have a microstructure with the coexistence of a crystal phase and an amorphous phase, or the existence of an amorphous phase alone. The microstructure can substantially improve cycle performance.

The negative electrode active material may be a titanium oxide alone, or a mixture of a titanium oxide with one or more of other negative electrode active materials.

Compounds that allow lithium ions to be inserted therein and extracted therefrom can be used as the other negative electrode active materials. The compounds include oxides, sulfides, and nitrides. These compounds also include metal compounds that include no lithium in uncharged states, but come to include lithium through charging.

Such oxides include amorphous tin oxides such as, for example, $SnB_{0.4}P_{0.6}O_{3.1}$, tin-silicon oxides such as, for example, $SnSiO_3$, silicon oxides such as, for example, SiO, and tungsten oxides such as, for example, $WO_3$.

The sulfides include titanium sulfide such as, for example, $TiS_2$, molybdenum sulfides such as, for example, $MoS_2$, and iron sulfides such as, for example, FeS, $FeS_2$, and $Li_xFeS_2$.

The nitrides include, for example, lithium-cobalt nitrides (for example, $Li_xCo_yN$, $0 < x < 4$, $0 < y < 0.5$).

The negative electrode active material particles preferably have a BET specific surface area within the range of 5 m$^2$/g to 100 m$^2$/g. The negative electrode active material particles with a BET specific surface area of 5 m$^2$/g or

more have a relatively large number of reaction fields with the nonaqueous electrolyte, thus producing a great effect of suppressing the decrease in capacity by formation of the coating according to the present embodiment. The BET specific surface area of 100 $m^2/g$ or less can suppress the reduction of the effect of suppressing the decrease in capacity by formation of the coating.

The conductive agent is combined, if necessary, in order to enhance the current colleting performance, and reduce the contact resistance between the active material and the current collector. Examples of the conductive agent include carbonaceous substances such as acetylene black, Ketjen black, graphite and/or coke.

For example, polytetrafluoroethylene (PTFE), polyvinylidene fluoride (PVdF), a cellulosic member, for example, sodium carboxymethyl cellulose (CMC), a fluorine-containing rubber or a styrene-butadiene rubber can be, without limitation thereto, used as the binder.

The negative electrode active material, the conductive agent, and the binder are preferably combined respectively in proportions of: 80 mass% to 98 mass%; 0 mass% to 20 mass%; and 2 mass% to 7 mass%. The amount of the binder, adjusted to 2 mass% or more, provides a sufficient binding property between the negative electrode active material-containing layer and the negative electrode current collector, thereby achieving highly adapted cycle characteristics. On the other hand, from the perspective of increasing the capacity, the amount of the conductive agent is preferably 20 mass% or less, and the amount of the binder is preferably 7 mass% or less.

3) Nonaqueous Electrolyte

The nonaqueous electrolyte refers to a liquid nonaqueous electrolyte at normal temperature (20°C) and 1 atmosphere, which is prepared by dissolving an electrolyte in a non-aqueous solvent. For example, a non-aqueous electrolyte solution can be used. The electrolyte is preferably dissolved at a concentration of 0. 5 mol/L to 2.5 mol/L in a nonaqueous solvent.

For the electrolyte, for example, lithium salts can be used, such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium hexafluoroantimonate ($LiSbF_6$), lithium trifluoromethanesulfonate ($LiCF_3SO_3$), lithium bistrifluoromethylsulfonylimide [$LiN(CF_3SO_2)_2$], lithium bispentafluoroethanesulfonylimide [$Li(C_2F_5SO_2)_2N$], lithium bisoxalatoborate [$LiB(C_2O_4)_2$], and lithium difluoro(trifluoro-2-oxide-2-trifluoro-methylpropionate(2-) -0,0)borate [$LiBF_2(OCOOC(CF_3)_2]$. For the electrolyte, one type of electrolyte may be used alone, or two or more types of electrolytes may be used in a mixture. The electrolyte is preferably unlikely to be oxidized even at high potentials, and $LiBF_4$ or $LiPF_6$ is most preferred. In particular, when the negative electrode is 50 $m^2/g$ or more in weight per area, it is preferable to use $LiPF_6$ because the battery resistance can be kept from being increased. When the negative electrode is less than 50 $m^2/g$ in weight per area, it is preferable to use $LiBF_4$ because gases can be kept from being generated in the battery when the battery is used in high-temperature environments.

The concentration of the electrolyte salt preferably falls within the range of 1 M to 3M. This concentration can make the viscosity of the nonaqueous electrolyte appropriate, and achieve superior performance when a high load current is applied.

For the non-aqueous solvent, for example, a cyclic carbonate such as propylene carbonate (PC), ethylene carbonate (EC), dipropyl carbonate (DPC), and vinylene carbonate, a chain-like carbonate such as diethyl carbonate (DEC), dimethyl carbonate (DMC), and methyl ethyl carbonate (MEC), a cyclic ether such as tetrahydrofuran (THF), 2-methyltetrahydrofuran (2MeTHF), and dioxolan (DOX), a chain-like ether such as dimethoxyethane (DME) and diethoxyethane (DEE), and $\gamma$-butyrolactone (GBL), acetonitrile (AN), orsulfolane (SL) can be used either alone or in combination.

The nonaqueous electrolyte may include an additive. The additive is not to be considered particularly limited, but examples thereof include vinylene acetate (VA), vinylene butylate, vinylene hexanate, vinylene crotonate, and catechol carbonate. The concentration of the additive preferably falls within the range of 0.1 mass% to 3 mass% with respect to the mass of the nonaqueous electrolyte before the addition of the additive. A further preferred range of the concentration is 0. 5 mass% to 1 mass%.

In the case of forming a fluoride layer on the negative electrode surface by an electrochemical method, at least one selected from the group consisting of HF, $LiPF_6$, $LiBF_4$, LiTFSI, LiFSI, LiBETI, and LiBOB is preferred as the fluoride included in the nonaqueous electrolyte.

4) Separator

The separator is disposed between the positive electrode and the negative electrode.

As the separator, for example, porous films including polyethylene, polypropylene, cellulose, or polyvinylidene fluoride (PVdF), or non-woven fabrics of synthetic resins can be used either alone or in combination.

The separator preferably has a pore median size from 0.15 $\mu$m to 2.0 $\mu$m obtained by mercury porosimetry. The pore median size adjusted to 0.15 $\mu$m or more achieves a high output, with the low film resistance of the separator.

In addition, the size of 2.0 μm or less can achieve high safety, because the separator is uniformly shut down. Further, the diffusion of the nonaqueous electrolyte is promoted by capillarity, thereby preventing the cycle from being degraded by exhaustion of the nonaqueous electrolyte. A more preferred range of the pore median size is 0.18 μm to 0.40 μm.

The separator preferably has a pore mode diameter from 0.12 μm to 1.0 μm obtained by mercury porosimetry. The pore mode diameter of 0.12 μm or more achieves a high output, with the low film resistance of the separator, and further prevents the separator from being altered under high-temperature and high-voltage environments, thereby achieving a high output. In addition, the diameter of 1.0 μm or less can achieve high safety, because the separator is uniformly shut down. A more preferred range of the pore mode diameter is 0.18 μm to 0.35 μm.

The separator preferably has a porosity from 45% to 75%. The porosity of 45% or more achieves a high output, with a sufficient absolute quantity of ions in the separator. The porosity of 75% or less can achieve high safety, because the separator is high in strength, and uniform shut down. A more preferred range of the porosity is 50% to 65%.

5) Container Member

For example, a laminate film of 0.2 mm or less in wall thickness or a metallic container of 1.0 mm or less in wall thickness can be used as the container member. The metallic container is preferably 0.5 mm or less in wall thickness.

The shape of the container member may be a flattened shape, a cuboid shape, a cylindrical shape, a coin shape, a button shape, a sheet shape, or a stacked shape, depending on the intended use of the nonaqueous electrolyte battery according to the present embodiment. The intended use of the nonaqueous electrolyte battery according to the present embodiment can be, for example, a small-size battery built in a portable electronic device or the like, or a large-size battery built in a vehicle such as a two-wheel to four-wheel automobile.

The laminate film is a multilayer film including a metal layer and a resin layer that coats the metal layer. For the reduction in weight, the metal layer is preferably aluminum foil or aluminum alloy foil. The resin layer intended to reinforce the metal layer can use polymers such as polypropylene (PP), polyethylene (PE), nylon, and polyethylene terephthalate (PET). The laminate film can be formed into the shape of the container member through sealing by thermal fusion bonding.

Aluminum or an aluminum alloy can be used for the metallic container. The aluminum alloy is preferably an alloy containing an element such as magnesium, zinc, and silicon. On the other hand, the content of transition metals such as iron, copper, nickel, and chromium is preferably 1 weight% or less. Thus, it becomes possible to improve long-term reliability and radiation performance dramatically under high-temperature environments.

The metallic container of aluminum or an aluminum foil, for example, a metallic can is preferably 50 μm or less in average crystal particle size. The average crystal particle size is more preferably 30 μm or less. The average crystal particle size is further preferably 5 μm or less. The average crystal particle size adjusted to 50 μm or less can dramatically increase the strength of the metallic can of aluminum or an aluminum alloy. In addition, the size can further make the can thin-walled. As a result, a battery suitable for an in-car application can be provided which is light in weight, high in output, and excellent in long-term reliability.

6) Negative Electrode Terminal

The negative electrode terminal can be formed from a material that has a potential within the range of 0.4 V to 3 V (vs Li/Li$^+$) with respect to lithium, and has electrical stability and conductivity. Specifically, examples of the material include an aluminum alloy containing an element such as Mg, Ti, Zn, Mn, Fe, Cu, and Si, and aluminum. The same material as the negative electrode current collector is preferred in order to reduce the contact resistance.

7) Positive Electrode Terminal

The positive electrode terminal can be formed from a material that has a potential within the range of 3 V to 5 V (vs Li/Li$^+$) with respect to lithium, and has electrical stability and conductivity. Specifically, examples of the material include an aluminum alloy containing an element such as Mg, Ti, Zn, Mn, Fe, Cu, and Si, and aluminum. The same material as the positive electrode current collector is preferred in order to reduce the contact resistance.

The nonaqueous electrolyte battery according to the present embodiment can be manufactured, for example, by assembling an uncharged nonaqueous electrolyte battery, then initially charging the battery, and aging the battery as explained below.

A coating is formed on the negative electrode surface by holding a battery with an SOC from 20% to 100% in a drying machine kept at a temperature within the range of, for example, 90°C to 120°C. It is to be noted that the SOC herein refers to the amount of charge in the case of determining a discharge capacity (C) by charge and discharge within a recommended potential range, and charging at a current value of 0.1C to 1C from a recommended state of discharge.

The temperature of keeping in the drying machine (hereinafter, which may be referred to as an aging temperature) preferably falls within the range of 95°C to 110°C. The time of keeping in the drying machine is, for example, 10 hours to 100 hours. When the SOC of the battery is high before the aging, or when the aging temperature is high, the holding time can be relatively shortened. The aging temperature lower than 90°C increases the length of time before the coating is formed, or fails to form any coating that satisfies the formula (1) mentioned above. In addition, when the aging temperature is higher than 120°C, the rate of coating formation is increased, and accordingly, the battery resistance is increased. As a result, output characteristics and the like are degraded, which is not preferable. The aging may be carried out continuously or intermittently. After the aging, gases generated in the battery can be released by opening the battery, if necessary. After the gas release, vacuuming may be optionally carried out, and thereafter, the battery is subjected to sealing again.

Next, several examples of the nonaqueous electrolyte battery according to the present embodiment will be described with reference to the drawings.

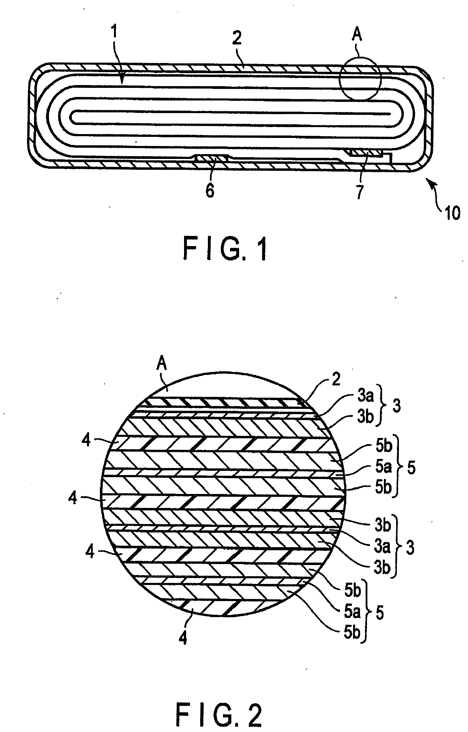

First, a flattened nonaqueous electrolyte battery as an example of the nonaqueous electrolyte battery according to the present embodiment will be described with reference to FIGS. 1 and 2.

FIG. 1 is a cross-sectional pattern diagram illustrating an example of the flattened nonaqueous electrolyte battery according to the present embodiment. FIG. 2 is an enlarged cross-sectional view of an A part in FIG. 1.

The nonaqueous electrolyte battery 10 shown in FIGS. 1 and 2 includes a flattened rolled electrode group 1.

The flattened rolled electrode group 1 includes negative electrodes 3, separators 4, and positive electrodes 5, as shown in FIG. 2. The separator 4 is interposed between the negative electrode 3 and the positive electrode 5. This flattened rolled electrode group 1 can be formed by spirally rolling a stacked body formed by stacking the negative electrodes 3, the separators 4, and the positive electrodes 5, with the negative electrodes 3 outer as shown in FIG. 2, and pressing the spirally rolled body into a shape. This stacked body is stacked such that the separator 4 is interposed between the negative electrode 3 and the positive electrode 5.

The negative electrode 3 each has a negative electrode current collector 3a and a negative electrode active material-containing layer 3b. The outermost negative electrode 3 is configured to have the negative electrode active material-containing layer 3b formed on only one inner side of the negative electrode current collector 3a, as shown in FIG. 2. The other negative electrodes 3 each have the negative electrode active material-containing layer 3b formed on both sides of the negative electrode current collector 3a.

The positive electrodes 5 each have a positive electrode active material-containing layer 5b formed on both sides of a positive electrode current collector 5a.

As shown in FIGS. 1 and 2, near an outer peripheral end of the rolled electrode group 1, a negative electrode terminal 6 is connected to the negative electrode current collector 3a of the outermost negative electrode 3, whereas a positive electrode terminal 7 is connected to the positive electrode current collector 5a of the inner positive electrode 5.

The rolled electrode group 1 is housed in a sac-like container 2 of a laminate film with a metallic layer interposed between two resin layers.

The negative electrode terminal 6 and the positive electrode terminal 7 are extended from openings of the sac-like container 2 to the outside. For example, a liquid nonaqueous electrolyte is injected from the openings of the sac-like container 2, and housed in the sac-like container 2.

The openings of the sac-like container 2 are heat-sealed with the negative electrode terminal 6 and positive electrode terminal 7 interposed, thereby completely hermetically enclosing the rolled electrode group 1 and the liquid nonaqueous electrolyte.

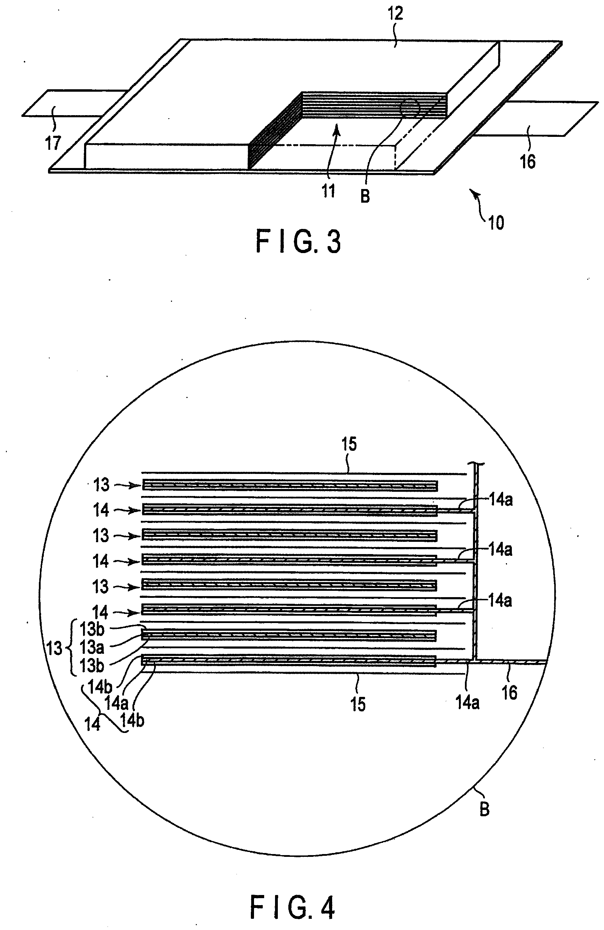

Next, another example of the nonaqueous electrolyte battery according to the present embodiment will be described with reference to FIGS. 3 and 4.

FIG. 3 is a cutaway perspective view schematically illustrating another example of the nonaqueous electrolyte battery according to the present embodiment. FIG. 4 is a cross-sectional pattern diagram of a B part in FIG. 3.

The nonaqueous electrolyte battery 10 shown in FIGS. 3 and 4 includes a stacked electrode group 11. As shown in FIG. 3, the stacked electrode group 11 is housed in a container member 12 of a laminate film with a metallic layer interposed between two resin films. As shown in FIG. 4, the stacked electrode group 11 has a structure obtained by alternately stacking positive electrodes 13 and negative electrodes 14 with separators 15 interposed therebetween. There is a plurality of positive electrodes 13, each including a positive electrode current collector 13a and a positive electrode material containing layer 13b supported on both sides of the positive electrode current collector 13a. There is a plurality of negative electrodes 14, each including a negative electrode current collector 14a and a negative electrode active material containing layer 14b supported on both sides of the negative electrode current collector 14a. The negative electrode current collector 14a of each negative electrode 14 has a side protruded from the negative electrode 14. The protruded negative electrode current collector 14a is electrically connected to a strip negative electrode terminal 16. The strip negative electrode terminal 16 has an end extended from the container member 12 to the outside. In addition, although not shown, the positive electrode current collector 13a of the positive electrode 13 has a side located on the side opposite to the protruded side of the negative electrode current collector 14a, which is protruded from the positive electrode 13. Although also not shown, the positive electrode current collector 13a protruded from the positive electrode 13 is electrically connected to a strip positive electrode terminal 17. The strip positive electrode terminal 17 has an end located on the side opposite to the negative electrode terminal 16, and extended from a side of the container member 12 to the outside.

The nonaqueous electrolyte battery according to the first embodiment includes a positive electrode, a negative electrode, and a nonaqueous electrolyte. The negative electrode includes a negative electrode active material including a titanium oxide, and has a coating that coats at least a portion of a surface of the negative electrode. The coating includes fluorine atoms, organic atoms and metal atoms, and satisfies the following formula (1).

$$0.2 \leq F1/F2 \leq 0.8 \ldots (1)$$

In the formula (1), F1 represents a proportion (%) of an integrated intensity of a peak F1 derived from an amount of the fluorine atoms bonded to the organic atoms according to X-ray photoelectron spectroscopy to an integrated intensity of a peak F1S derived from a whole amount of the fluorine atoms according to the X-ray photoelectron spectroscopy, and F2 represents a proportion (%) of an integrated intensity of a peak F2 derived from an amount of the fluorine atoms bonded to the metal atoms according to the X-ray photoelectron spectroscopy to the integrated intensity of the peak F1S. The negative electrode surface is at least partially coated with the coating that satisfies the formula (1) mentioned above, thereby inhibiting side reactions, and then making it possible suppress the decrease in capacity when charge and discharge are repeated. In addition, battery swell can be suppressed which is caused by gases generated by side reactions.

(Second Embodiment)

According to a second embodiment, a battery pack is provided. This battery pack includes the nonaqueous electrolyte battery according to the first embodiment.

The battery pack according to the present embodiment may include one or more nonaqueous electrolyte batteries. The nonaqueous electrolyte batteries that can be included in the battery pack can be electrically connected in series, in parallel, or in combination of in series and in parallel. The nonaqueous electrolyte batteries can be also electrically connected to constitute a battery module. The battery pack may include a plural of battery modules.

The battery pack according to the second embodiment may further comprise a protective circuit. The protective circuit has a function to control charging and discharging of the nonaqueous electrolyte battery. Alternatively, a circuit included in equipment where the battery pack serves as a power source (for example, electronic devices, vehicles, and the like) may be used as the protective circuit for the battery pack.

Moreover, the battery pack according to the second embodiment may further comprise an external power distribution terminal. The external power distribution terminal is configured to externally output the current from the nonaqueous electrolyte battery, and to input the current to the nonaqueous electrolyte battery. In other words, when the battery pack is used as a power source, the current is externally provided via the external power distribution terminal. Also, when the battery pack is charged, the charging current (including regenerative energy caused by power of vehicles such as automobiles) is provided to the battery pack via the external power distribution terminal.

Next, an example of the battery pack according to the present embodiment will be described with reference to the drawings.

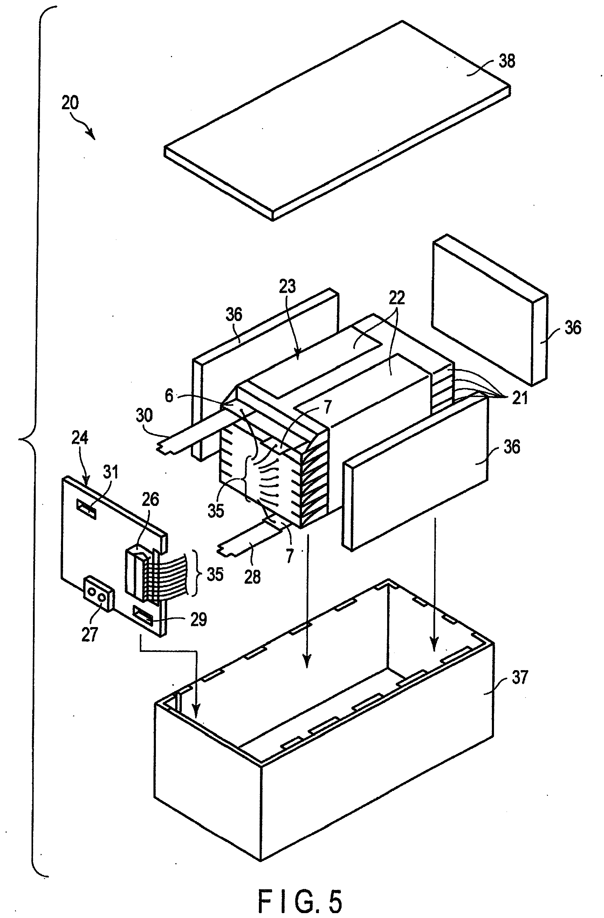

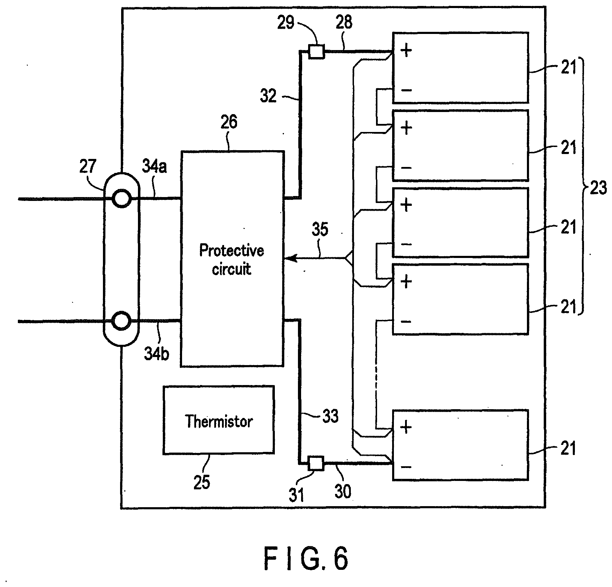

FIG. 5 is an exploded perspective view illustrating an example of the battery pack according to the present embodiment. FIG. 6 is a block diagram illustrating an electrical circuit of the battery pack shown in FIG. 5.

The battery pack 20 shown in FIGS. 5 and 6 includes a plural of flattened unit cells 21 that have the structure shown in FIGS. 1 and 2.

The unit cells 21 are stacked such that a negative electrode terminal 6 and a positive electrode terminal 7 extended to the outside are aligned in the same orientation, and fastened with an adhesive tape 22, thereby constituting a battery module 23. The unit cells 21 are electrically series-connected to each other as shown in FIG. 6.

A printed wiring board 24 is disposed to be opposed to side surfaces of the unit cells 21 from which the negative electrode terminal 6 and the positive electrode terminal 7 are extended. The printed wiring board 24 has a thermistor 25, a protective circuit 26, and an energizing terminal 27 to an external device mounted as shown in FIG. 6. An insulating plate (not shown) is attached to a surface of the printed wiring board 24 opposed to the battery module 23, in order to avoid unnecessary connections to wirings of the battery module 23.

A positive side lead 28 is connected to the positive electrode terminal 7 of the unit cell 21 located on the lowermost layer of the battery module 23, with an end of the lead inserted into a positive side connector 29 of the printed wiring board 24, and electrically connected. A negative side lead 30 is connected to the negative electrode terminal 6 of the unit cell 21 located on the uppermost layer of the battery module 23, with an end of the lead inserted into a negative side connector 31 of the printed wiring board 24, and electrically connected. These connectors 29 and 31 are connected to the protective circuit 26 respectively through wirings 32 and 33 formed on the printed wiring board 24.

The thermistor 25 detects the temperatures of each unit cell 21, and the detection signals are transmitted to the protective circuit 26. The protective circuit 26 can, under a predetermined condition, break a plus wiring 34a and a minus wiring 34b between the protective circuit 26 and the energizing terminal 27 to an external device. An example of the predetermined condition is when a signal that indicates that the temperature of the unit cell 21 is equal to or higher than a predetermined temperature is received from the thermistor 25. In addition, another example of the predetermined condition is when over-charge, over-discharge, overcurrent, or the like is detected in the unit cells 21. The detection of over-charge or the like is directed to the individual unit cells 21 or the battery module 23. In the case of detection for the individual unit cells 21, the voltages of the cells may be detected, or the positive electrode potential or the negative electrode potential may be detected. In the latter case, lithium electrodes for use as reference electrodes are inserted into the individual unit cells 21. In the case of the battery pack in FIGS. 5 and 6, a wiring 35 for voltage detection is connected to each of the unit cells 21, and detected signals are transmitted to the protective circuit 26 through the wiring 35.

Protective sheets 36 of a rubber or a resin are disposed respectively on the three side surfaces among the four side surfaces of the battery module 23, excluding the side surface from which the positive electrode terminal 7 and the negative electrode terminal 6 are protruded.

The battery module 23 is housed in a housing container 37, along with the respective protective sheets 36 and the printed wiring board 24. The protective sheets 36 are disposed on both inner surfaces of a housing container 37 in the longer side direction and an inner surface thereof in the shorter side direction. The printed wiring board 24 is disposed on the opposite inner surface opposed to the inner surface of the housing container 37 in the shorter side direction, with the protective sheet 36 disposed. The battery module 23 is located in the space surrounded by the protective sheets 36 and the printed wiring board 24. A lid 38 is attached to the upper surface of the housing container 37.

It is to be noted that for fixing the battery module 23, a heat-shrinkable tape may be used in place of an adhesive tape 22. In this case, a protective sheet is disposed on both side surfaces of the battery module, the heat-shrinkable tape is wrapped, and the heat-shrinkable tape is then shrunk by heat to bind the battery module.

The embodiment of the battery pack 20 shown in FIGS. 5 and 6 has the plural of unit cells 21 connected in series, but may have the plural of unit cells 21 connected in series in order to increase the battery capacity. Alternatively, the battery pack may include a plural of unit cells 21 connected in series in combination with in parallel. The battery packs 20 can be also further electrically connected to each other in series or in parallel.

In addition, the battery pack 20 shown in FIGS. 5 and 6 includes the plural of unit cells 21, but may include one unit cell 21.

In addition, the embodiment of the battery pack is appropriately changed depending on the intended use. The battery pack according to the present embodiment is used in a preferred manner for intended uses required to have excellent cycle characteristics when a large current is extracted. Specifically, the battery pack is used, for example, as a power source for a digital camera, for a stationary battery, for a battery for rail way car, or as an in-car battery for vehicles of two-wheel to four-wheel hybrid electric automobiles, two-wheel to four-wheel electric automobiles, and assisted bicycles. In particular, as an in-car battery, the battery pack is used in a preferred manner.

In a vehicle such as an automobile having the battery pack according to the second embodiment mounted, the battery pack is configured to, for example, recover regenerative energy caused by power of the vehicle. Examples of the vehicle include two to four-wheeled hybrid electric automobiles, two to four-wheeled electric automobiles, electric assist bicycles, and electric trains.

The battery pack according to the second embodiment includes the nonaqueous electrolyte battery according to the first embodiment. Therefore, side reactions at the negative electrode of the nonaqueous electrolyte battery are inhibited, thereby making it possible to suppress the decrease in capacity when charge and discharge are repeated. In addition, cell swell can be suppressed which is caused by gases generated by side reactions, and high safety can be thus achieved.

According to a third embodiment, a vehicle is provided. The vehicle includes the battery pack according to the second embodiment.

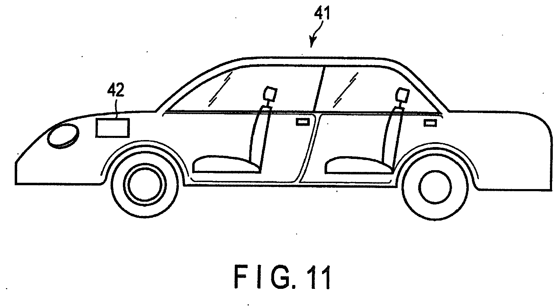

FIG. 11 shows an example of an automobile which includes a battery pack according to a second embodiment.

The automobile 41 shown in FIG. 11 includes a battery pack 42 which is an example of the battery pack according to the second embodiment mounted in its engine room. The mounting position is not limited to engine rooms. For example, the battery pack may also be mounted in rear parts of automobiles or under seats.

The vehicle according to the third embodiment includes the battery pack according to the second embodiment. Therefore, side reactions at the negative electrode of the nonaqueous electrolyte battery are inhibited, thereby making it possible to suppress the decrease in capacity when charge and discharge are repeated. In addition, cell swell can be suppressed which is caused by gases generated by side reactions, and high safety can be thus achieved.

[Examples]

Examples will be described below, but the embodiments are not to be considered limited to the examples described below.

(Example 1)

<Preparation of Positive Electrode>

$LiMn_{0.7}Fe_{0.3}PO_4$ (LMFP1) and a lithium cobalt oxide $LiCoO_2$ (LCO) were, as positive electrode active materials, prepared respectively in proportions of 80 weight% : 20 weight%, a graphite powder and acetylene black were prepared as a conductive agent, and polyvinylidene fluoride (PVdF) was prepared as a binder. The amounts of the positive electrode active materials, graphite powder, acetylene black, and PVdF were respectively 86 weight%, 3 weight%, 3 weight%, and 8 weight% with respect to the whole positive electrode. These raw materials were all added to and mixed with an N-methylpyrrolidone (NMP) solvent, thereby preparing a slurry. This slurry was applied to both sides of aluminum foil of 15 $\mu$m as a current collector, and dried. The current collector of the slurry dried was subjected to press forming, thereby preparing a positive electrode with an electrode density of 2.0 g/cm$^3$.

<Preparation of Negative Electrode>

$TiO_2$ (B) particles with a BET specific surface area of 10 m$^2$/g were prepared as a negative electrode active material, graphite was prepared as a conductive agent, and PVdF was prepared as a binder. The amounts of the negative electrode active material, graphite, and PVdF were respectively 85 weight%, 7 weight%, and 8 weight% with respect to the whole negative electrode. These raw materials were all added to and mixed with an N-methylpyrrolidone (NMP) solvent, thereby preparing a slurry. This slurry was applied to both sides of aluminum foil of 15 $\mu$m as a current collector, and dried. The slurry was adjusted to 100 g/cm$^2$ in weight per area. The current collector of the slurry dried was subjected to press forming, thereby preparing a negative electrode with an electrode density of 2.1 g/cm$^3$.

<Preparation of Nonaqueous Electrolyte>

Propylene carbonate (PC) and dimethyl ethyl carbonate (DEC) were mixed at a volume ratio of PC : DEC = 1 : 2, thereby preparing a mixed solvent. To this mixed solvent, 1.5 M of $LiPF_6$ was added as a supporting salt, thereby preparing a nonaqueous electrolyte.

<Preparation of Battery>

Both sides of the positive electrode were covered with a separator of polypropylene, the negative electrode was stacked to be opposed to the positive electrode with the separator interposed therebetween, and the stacked body was spirally rolled, thereby preparing an electrode group. This electrode group was inserted into a metallic can made of aluminum, and a cap with a liquid injection hole open was attached to an opening of the metallic can. In this condition, the electrode group was dried, and thereafter, the nonaqueous electrolyte was injected into the metallic can from the liquid injection hole. Thereafter, the liquid injection hole is sealed, thereby producing an initially uncharged or undischarged nonaqueous electrolyte battery with a capacity of 1 Ah.

<Treatment of Charging and Discharging Battery>

The initially uncharged or undischarged battery prepared was charged in a constant-current and constant-voltage condition of 200 mA/2.7 V under an environment at 25°C, into a fully charged state. Thereafter, the battery was discharged until the battery voltage reached 1.5 V at 200 mA. After confirming whether a predetermined discharge capacity was achieved, the battery was charged at 500 mAh into a half-charged state. Thereafter, the resistance of the battery was measured, and regarded as an initial battery resistance (R0).

<Aging Treatment>

The battery in the half-charged state was charged until the SOC reached 60%, by additionally charging the battery or the like. The battery in this condition was left over 48 hours in a drying machine set at 95°C.
Table 1 below summarizes the proportions of LMFP1 and LCO to the positive electrode active material, the type of the negative electrode active material, the BET specific surface area of the negative electrode active material, the type of the electrolyte, the SOC after the additional charge for the aging treatment, the aging temperature, and the aging time. In Table 1, the "BET Specific Surface Area" indicates the BET specific surface area of the negative electrode active material, and the "SOC" indicates the SOC after the additional charge in the aging treatment mentioned above.

<Evaluation of Capacity Retention Ratio>

After the aging treatment, for confirmation of 0.2C capacity and 1C capacity, the battery was subjected to CCCV charge at 1.0 A, and then discharged at 200 mA in the confirmation of the 0.2C capacity, and discharged at 1 A in the confirmation of the 1C capacity. After the final capacity confirmation, the battery was charged at 200 mAh into a half-charged state, and the battery resistance (R1) was measured. Thereafter, a charge-and-discharge test at 1 A was carried out in an environment at 45°C to 60°C, thereby examining the change in discharge capacity. The capacity change and battery resistance (R2) after 100 cycles were measured. The results are shown in Table 2 below. In Table 2, the "Capacity Retention Ratio" indicates the ratio of the capacity after the 100 cycles to the initial capacity in percentage, and the "R2/R1" is a numerical value that represents, in ratio, the change in battery resistance.

<X-ray Photoelectron Spectroscopy (XPS)>

The negative electrode according to Example 1 was subjected to XPS as follows.

ESCA 300 from SCIENTA was used as a system. The Al-K$\alpha$ line by single-crystal spectroscopy (1486.6 eV) was used for an excited X-ray source. The X-ray output was adjusted to 4 kW (13 kV x 310 mA), the photoelectron detection angle is adjusted to 90°, and the analysis area is adjusted to approximately 4 mm x 0.2 mm. Scanning was executed at 0.10 eV/step.

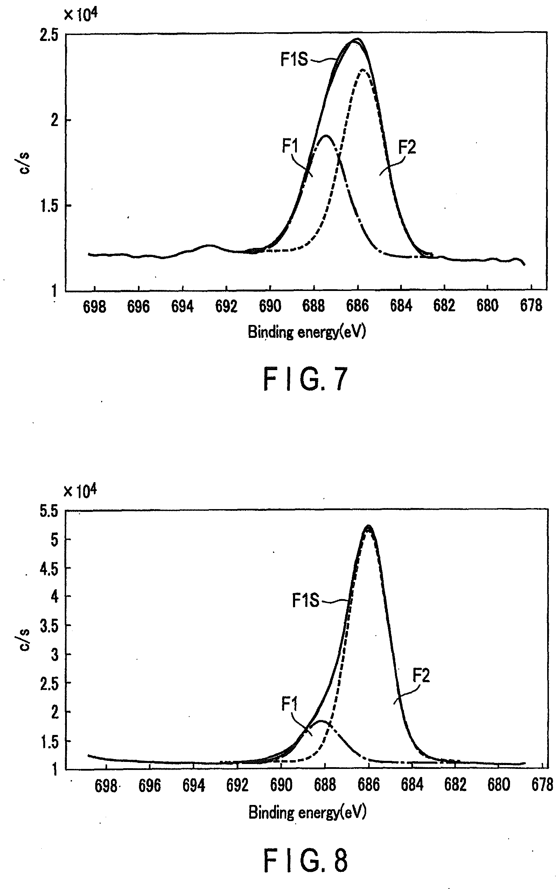

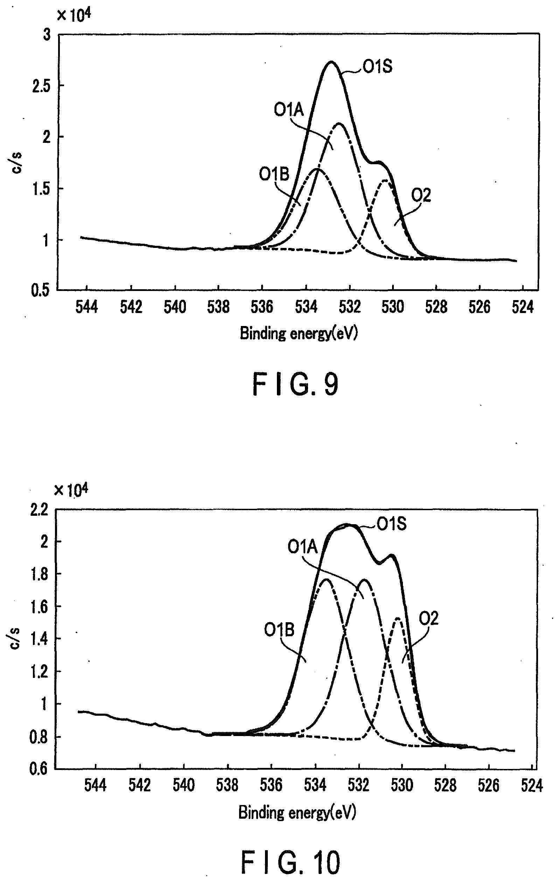

This measurement achieved the measurement of: the intensity of an F1S peak appearing at a position of 680 eV to 691 eV; and the intensity of an O1S peak appearing at a position of 528 eV to 538 eV. The spectrum data obtained is shown in FIGS. 7 and 9. FIG. 7 shows spectrum data of the F1S peak according to Example 1. FIG. 9 shows spectrum data of the O1S peak according to Example 1. FIG. 7 also shows an F1 peak and an F2 peak obtained by dividing the F1S peak through approximation at Gauss curve : Lorenz curve = 90 : 10, and measurement spectral fitting in the measurement range of 678 eV to 698 eV. The F1 and F2 peak positions are respectively 687.5 eV and 685.7 eV, and the peaks are subjected to the fitting with respective half widths regarded as 2.3 eV. Depending on measurement conditions, the peak position and half width of the F1 peak and the peak position and half width of the F2 peak may each vary by approximately $\pm 0.3$ eV.

FIG. 9 also shows an O1A peak, an O1B peak, and an 02 peak obtained by dividing the O1S peak through approximation at Gauss curve : Lorenz curve = 90 : 10, and measurement spectral fitting in the measurement range of 524 eV to 544 eV. It is to be noted that the 01 peak, not shown refers to a peak corresponding to the sum of the areas of the O1A peak and O1B peak. The O1-A, O1-B, and 02 peak positions are respectively 532.5 eV, 533.5 eV, and 530.4 eV, and the peaks are subjected to the fitting with respective half widths regarded as 1.6 eV, 2.3 eV, 2.3 eV. Depending on measurement conditions, the peak positions and half widths of the O1-A and O1-B peaks may vary by approximately 0.5 eV. The peak position and half width of the 02 peak may vary by approximately 0.3 eV.

Table 2 below lists the results dividing the peaks.

In Table 2, the "F1 peak" represents a numerical value indicating, in percentage, the ratio of the area of the F1 peak to the area of the F1S peak, the "F2 peak" represents a numerical value indicating, in percentage, the ratio of the area of the F2 peak to the area of the F1S peak, the "F1/F2" represents the ratio of the area of the F1 peak to the area of the F2 peak, the "O1A peak" represents a numerical value indicating, in percentage, the ratio of the area of the O1A peak to the area of the O1 peak, the "01B peak" represents a numerical value indicating, in percentage, the ratio of the area of the O1B peak to the area of the 01 peak, the "O2 peak" represents a numerical value indicating, in percentage, the ratio of the area of the 02 peak to the area of the O1S peak, the "O1/O2" represents the ratio of the area of the O1 peak to the area of the 02 peak, and the "O1A/O1B" represents the ratio of the area of the O1A peak to the area of the 01B peak.

Further, in the case of removing the negative electrode from the battery, the electrode is removed in accordance with the following procedure. First, the battery is subjected to the aging treatment mentioned above, and charged and discharged at 200 mA and 1.0 A for capacity confirmation. Then, as described in the first embodiment, the negative electrode is removed from the battery after the battery is put into a state of discharge. The negative electrode put into the state of discharge is removed in an argon atmosphere, and cleaned with methylethyl carbonate to remove a Li salt attached to the negative electrode surface. After drying the negative electrode with the Li salt removed therefrom, the sample is then loaded, and placed in a sample holder under a nitrogen atmosphere. This sample is subjected to the XPS mentioned above.

(Examples 2 to 23)

Batteries were prepared by the same method as in Example 1, except that the proportions of LMFP1 and LCO to the positive electrode active material, the type of the negative electrode active material, the type of the electrolyte, the SOC after the additional charge, the aging temperature, and the aging time were changed in accordance with Table 1 below. However, in Examples 4, 6, 8, and 10, the slurry for the preparation of the negative electrode was changed to 30 g/cm$^2$ in weight per area. The anatase-type $TiO_2$ used for a negative electrode according to Example 21 was 15 m$^2$/g in BET specific surface area. The $Nb_2O_7$ used for a negative electrode according to Example 22 was 12 m$^2$/g in BET specific surface area. These batteries were evaluated for aging and capacity retention ratio in the same way as in Example 1. The results are shown in Table 1 below.

(Comparative Example 1)

A battery was prepared by the same method as in Example 1, except that the aging treatment was not carried out. This battery was evaluated for aging and capacity retention ratio in the same way as in Example 1. The results are shown in Table 1 below.

(Comparative Example 2)

Batteries were prepared by the same method as in Example 1, except that the proportions of LMFP1 and LCO to the positive electrode active material, the type of the negative electrode active material, the type of the electrolyte, the SOC after the additional charge, the aging temperature, and the aging time were changed in accordance with Table 1 below. This battery was evaluated for aging and capacity retention ratio in the same way as in Example 1. The results are shown in Table 1 below.

In addition, the negative electrodes according to the examples and the comparative examples were subjected to XPS in accordance with the procedure described in Example 1. The results are shown in Table 2 below.

The spectrum data on the battery according to Comparative Example 1 is shown in FIGS. 8 and 10. FIG. 8 shows spectrum data of an F1 peak according to Comparative Example 1. FIG. 10 shows spectrum data of an O1S peak according to Comparative Example 1. FIG. 8 also shows an F1 peak and an F2 peak obtained by dividing the F1S peak through approximation at Gauss curve : Lorenz curve = 90 : 10, and measurement spectral fitting in the measurement range of 678 eV to 689 eV. FIG. 10 also shows an O1A peak, an O1B peak, and an 02 peak obtained by dividing the O1S peak through approximation at Gauss curve : Lorenz curve = 90 : 10, and measurement spectral fitting in the measurement range of 524 eV to 544 eV.

[Table 1]

| | Positive electrode active material (wt%) | | Negative electrode active material | Supporting salt | SOC (%) | Aging temperature (°C) | Aging time (h) |
|---|---|---|---|---|---|---|---|
| | LMFP1 | LCO | | | | | |
| Example 1 | 80 | 20 | $TiO_2(B)$ | $LiPF_6$ | 50 | 95 | 48 |
| Example 2 | 80 | 20 | $TiO_2(B)$ | $LiPF_6$ | 80 | 90 | 72 |
| Example 3 | 80 | 20 | $TiO_2(B)$ | $LiBF_4$ | 80 | 90 | 80 |
| Example 4 | 80 | 20 | $TiO_2(B)$ | $LiPF_6$ | 50 | 95 | 40 |
| Example 5 | 80 | 20 | $TiO_2(B)$ | $LiPF_6$ | 50 | 100 | 40 |
| Example 6 | 80 | 20 | $TiO_2(B)$ | $LiBF_4$ | 30 | 100 | 35 |
| Example 7 | 80 | 20 | $TiO_2(B)$ | $LiPF_6$ | 40 | 110 | 30 |
| Example 8 | 80 | 20 | $TiO_2(B)$ | $LiBF_4$ | 20 | 110 | 30 |
| Example 9 | 90 | 101 | $TiO_2(B)$ | $LiPF_6$ | 30 | 95 | 50 |
| Example 10 | 90 | 10 | $TiO_2(B)$ | $LiPF_6$ | 30 | 95 | 70 |
| Example 11 | 90 | 10 | $TiO_2(B)$ | $LiPF_6$ | 50 | 100 | 72 |
| Example 12 | 90 | 10 | $TiO_2(B)$ | $LiBF_4$ | 50 | 100 | 48 |

(continued)

| | Positive electrode active material (wt%) | | Negative electrode active material | Supporting salt | SOC (%) | Aging temperature (°C) | Aging time (h) |
|---|---|---|---|---|---|---|---|
| | LMFP1 | LCO | | | | | |
| Example 13 | 100 | 0 | $TiO_2(B)$ | $LiPF_6$ | 50 | 90 | 48 |
| Example 14 | 100 | 0 | $TiO_2(B)$ | $LiPF_6$ | 80 | 95 | 30 |
| Example 15 | 100 | 0 | $TiO_2(B)$ | $LiPF_6$ | 50 | 100 | 68 |
| Example 16 | 100 | 0 | $TiO_2(B)$ | $LiBF_4$ | 50 | 100 | 58 |
| Example 17 | 100 | 0 | $TiO_2(B)$ | $LiPF_6$ | 50 | 110 | 65 |
| Example 18 | 80 | 20 | $TiO_2(B)$ | $LiPF_6$ | 50 | 95 | 80 |
| Example 19 | 80 | 20 | $TiO_2(B)$ | $LiPF_6$ | 50 | 95 | 72 |
| Example 20 | 80 | 20 | $TiO_2(B)$ | $0.9M\text{-}LiPF_6 + 0.6M\text{-}LiBF_4$ | 50 | 100 | 48 |
| Example 21 | 80 | 20 | Anatase-type $TiO_2$ | $LiPF_6$ | 50 | 95 | 96 |
| Example 22 | 80 | 20 | $Nb_2O_7$ | $LiPF_6$ | 50 | 95 | 96 |
| Example 23 | 80 | 20 | $TiO_2(B)$ | $LiPF_6$ | 30 | 120 | 72 |
| Comparative Example 1 | 80 | 20 | $TiO_2(B)$ | $LiPF_6$ | - | - | - |
| Comparative Example 2 | 80 | 20 | $TiO_2(B)$ | $LiPF_6$ | 50 | 80 | 100 |

[Table 2]

| | R0 (mΩ) | R2/R1 | Capacity retention ratio (%) | F1/F2 | O1/O2 | O1A/O1B |
|---|---|---|---|---|---|---|
| Example 1 | 30 | 1.2 | 95 | 0.6 | 3.5 | 1.1 |
| Example 2 | 28 | 1.3 | 92 | 0.55 | 3.8 | 1.2 |
| Example 3 | 31 | 1.25 | 93 | 0.5 | 3.9 | 1.05 |
| Example 4 | 15 | 1.1 | 96.8 | 0.52 | 4 | 1.08 |
| Example 5 | 32 | 1.12 | 97 | 0.61 | 4.3 | 1.12 |
| Example 6 | 38 | 1.09 | 96.8 | 0.62 | 5.5 | 1.11 |
| Example 7 | 35 | 1.06 | 98.5 | 0.68 | 5.2 | 1.12 |
| Example 8 | 40 | 1.05 | 99 | 0.75 | 5.8 | 1.13 |
| Example 9 | 31 | 1.15 | 97 | 0.61 | 4.2 | 1.12 |
| Example 10 | 16 | 1.16 | 97.5 | 0.67 | 4.5 | 1.08 |
| Example 11 | 35 | 1.1 | 97 | 0.68 | 3.6 | 1.16 |
| Example 12 | 44 | 1.09 | 98 | 0.78 | 3.8 | 1.12 |
| Example 13 | 32 | 1.2 | 94 | 0.64 | 4.2 | 1.16 |
| Example 14 | 35 | 1.15 | 95.5 | 0.67 | 4.3 | 1.05 |
| Example 15 | 38 | 1.13 | 97 | 0.7 | 4.5 | 1.12 |
| Example 16 | 39 | 1.11 | 97.3 | 0.69 | 5.2 | 1.08 |
| Example 17 | 43 | 1.08 | 98 | 0.71 | 5.5 | 1.15 |

(continued)

|  | R0 (mΩ) | R2/R1 | Capacity retention ratio (%) | F1/F2 | O1/O2 | O1A/O1B |
|---|---|---|---|---|---|---|
| Example 18 | 32 | 1.2 | 95 | 0.64 | 3.9 | 1.08 |
| Example 19 | 31 | 1.25 | 97 | 0.63 | 4.1 | 1.12 |
| Example 20 | 34 | 1.3 | 98 | 0.66 | 4.4 | 1.15 |
| Example 21 | 34 | 1.3 | 96 | 0.61 | 4.3 | 1.14 |
| Example 22 | 36 | 1.35 | 97 | 0.7 | 4 | 1.07 |
| Example 23 | 65 | 1.1 | 97 | 0.7 | 4.2 | 1.12 |
| Comparative Example 1 | 22 | 2.3 | 52 | 0.15 | 3.5 | - |
| Comparative Example 2 | 26 | 2 | 58 | 0.18 | 4 | 0.98 |

The following is determined from the results in Tables 1 and 2.

It is determined that Examples 1 to 23 with F1/F2 within the range of 0.2 to 0.8 are significantly high in capacity retention ratio, as compared with Comparative Examples 1 and 2 with F1/F2 less than 0.2. It is determined that Examples 1 to 23 with 01A/01B of 1 or more are significantly high in capacity retention ratio, as compared with Comparative Examples 1 and 2. Less battery swell also contributes to the successfully suppressed decrease in capacity.

In addition, for example, from Examples 5 and 6, Examples 11 and 12, and Examples 15 and 16, it is determined that high capacity retention ratios have been successfully achieved even with the ratio changed between LMFP1 and LCO in the positive electrode active material. From a comparison made between Example 1 and Examples 21 and 22, it is determined that high capacity retention ratios have been successfully achieved even with the negative electrode active material changed from the $TiO_2$ (B) to the anatase-type $TiO_2$ or $Nb_2O_7$. In addition, it is determined that high capacity retention ratios have been successfully achieved even with the electrolyte changed from $LiPF_6$ to $LiBF_4$.

In addition, the batteries according to Comparative Examples 1 and 2 swelled after the 100 cycles, whereas the batteries according to Examples 1 to 23 were found to have no battery swell even after the 100 cycles.

The nonaqueous electrolyte battery according to at least one of the embodiments and examples described above includes a positive electrode, a negative electrode, and a nonaqueous electrolyte. The negative electrode includes a negative electrode active material including a titanium oxide, and has a coating that coats at least a portion of a surface of the negative electrode. The coating includes fluorine atoms, organic atoms and metal atoms, and satisfies the following formula (1). $0.2 \leq F1/F2 \leq 0.8$ ...(1) In the formula (1), F1 represents a proportion (%) of an integrated intensity of a peak F1 derived from an amount of the fluorine atoms bonded to the organic atoms according to X-ray photoelectron spectroscopy to an integrated intensity of a peak F1S derived from a whole amount of the fluorine atoms according to the X-ray photoelectron spectroscopy, and F2 represents a proportion (%) of an integrated intensity of a peak F2 derived from an amount of the fluorine atoms bonded to the metal atoms according to the X-ray photoelectron spectroscopy to the integrated intensity of the peak F1S. Thus, the nonaqueous electrolyte battery according to at least one of the embodiments and examples described above can suppress the decrease in capacity and cell swell.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A nonaqueous electrolyte battery (10) comprising a positive electrode (5), a negative electrode (3), and a nonaqueous electrolyte, wherein the negative electrode (3) comprises a negative electrode active material comprising a titanium oxide, and the negative electrode (3) comprises a coating that coats at least a portion of a surface of the negative electrode (3), and the coating comprises fluorine atoms, organic atoms and metal atoms, and the coating satisfies the following formula (1):

$$0.2 \leq F1/F2 \leq 0.8 \ ... \ (1)$$

where F1 represents a proportion (%) of an integrated intensity of a peak F1 derived from an amount of the fluorine atoms bonded to the organic atoms according to X-ray photoelectron spectroscopy to an integrated intensity of a peak F1S derived from a whole amount of the fluorine atoms according to the X-ray photoelectron spectroscopy, and F2 represents a proportion (%) of an integrated intensity of a peak F2 derived from an amount of the fluorine atoms bonded to the metal atoms according to the X-ray photoelectron spectroscopy to the integrated intensity of the peak F1S.

2. The nonaqueous electrolyte battery (10) according to claim 1,
wherein the coating comprises oxygen atoms bonded to the organic atoms, and satisfies the following formula (2):

$$1 \leq O1A/O1B \ ... \ (2)$$

where 01A represents a proportion (%) of an integrated intensity of a peak O1A at 532 $\pm$ 0.5 eV in the X-ray photoelectron spectroscopy to an integrated intensity of a peak O1 derived from a whole amount of the oxygen atoms bonded to the organic atoms according to the X-ray photoelectron spectroscopy, and 01B represents a proportion (%) of an integrated intensity of a peak 01B at 533 $\pm$ 0.5 eV in the X-ray photoelectron spectroscopy to the integrated intensity of the peak 01.

3. The nonaqueous electrolyte battery (10) according to claim 2, wherein the coating further comprises oxygen atoms bonded to the metal atoms, and satisfies the following formula (3) :

$$3.5 \leq O1/O2 \ ... \ (3)$$

where 01 represents a proportion (%) of an integrated intensity of a peak 01 derived from an amount of the oxygen atoms bonded to the organic atoms according to the X-ray photoelectron spectroscopy to an integrated intensity of a peak O1S derived from an whole amount of oxygen atoms according to the X-ray photoelectron spectroscopy, and 02 represents a proportion (%) of an integrated intensity of a peak 02 derived from an amount of the oxygen atoms bonded to the metal atoms according to the X-ray photoelectron spectroscopy to the integrated intensity of the peak O1S.

4. The nonaqueous electrolyte battery (10) according to any one of claims 1 to 3, wherein the ratio F1/F2 falls within a range of 0.5 to 0.78.

5. The nonaqueous electrolyte battery (10) according to any one of claims 2 to 4, wherein the ratio O1A/O1B falls within a range of 1.05 to 1.2.

6. The nonaqueous electrolyte battery (10) according to any one of claims 3 to 5, wherein the ratio O1/O2 falls within a range of 3.5 to 5.8.

7. The nonaqueous electrolyte battery (10) according to any one of claims 1 to 6, wherein the negative electrode active material has a BET specific surface area within a range of 5 $m^2$/g to 100 $m^2$/g.

8. The nonaqueous electrolyte battery (10) according to any one of claims 1 to 7, wherein the positive electrode (5) comprises a positive electrode active material represented by $Li_xFe_{1-y}Mn_yPO_4$ (where $0 < x \leq 1$, $0 \leq y \leq 1$).

9. A battery pack (20) comprising the nonaqueous electrolyte battery (10) according to any one of claims 1 to 8.

10. The battery pack (20) according to claim 9, further comprising: an external power distribution terminal; and a protective circuit (26).

11. The battery pack (20) according to claim 9 or 10,

wherein
the battery pack (20) comprises a plural of nonaqueous electrolyte batteries (10), and
the nonaqueous electrolyte batteries (10) are electrically connected in series, in parallel, or in combination of in series and in parallel.

12. A vehicle comprising the battery pack (20) according to any one of claims 9 to 11.

13. The vehicle according to claim 12, wherein the battery pack (20) is configured to recover a regenerative energy of a power of the vehicle.

FIG. 1

FIG. 2

F I G. 3

F I G. 4

F I G. 5

F I G. 6

F I G. 7

F I G. 8

F I G. 9

F I G. 10

F I G. 11

Europäisches Patentamt

European Patent Office

Office européen des brevets

## EUROPEAN SEARCH REPORT

Application Number

EP 17 15 4358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/113197 A1 (XIAO XINGCHENG [US] ET AL) 24 April 2014 (2014-04-24) | 1-6,9, 11,12 | INV. H01M4/485 |
| Y | * abstract; figures 1, 2 * * page 1, paragraph 0007 - page 11, paragraph 0081 * | 7-13 | H01M4/58 H01M4/62 |
| | ----- | | ADD. |
| X | KR 2007 0082379 A (LG CHEMICAL LTD [KR]) 21 August 2007 (2007-08-21) | 1-6,9,12 | H01M4/36 H01M4/02 |
| Y | * abstract; figure 1 * * page 2, paragraph 1 - page 7, paragraph 8 * | 7-10,13 | |
| | ----- | | |
| Y | EP 2 784 854 A1 (TOSHIBA KK [JP]) 1 October 2014 (2014-10-01) * page 2, paragraph 0005 - page 15, paragraph 0098; figures 2, 3; table 1 * | 7-13 | |
| | ----- | | |

TECHNICAL FIELDS SEARCHED (IPC)

H01M

The present search report has been drawn up for all claims

| Place of search | Date of completion of the search | Examiner |
|---|---|---|
| Munich | 27 April 2017 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 4358

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2017

| Patent document cited in search report | | Publication date | Patent family member(s) | | Publication date |
|---|---|---|---|---|---|
| US 2014113197 | A1 | 24-04-2014 | CN | 103779550 A | 07-05-2014 |
| | | | DE | 102013220351 A1 | 24-04-2014 |
| | | | US | 2014113197 A1 | 24-04-2014 |
| KR 20070082379 | A | 21-08-2007 | NONE | | |
| EP 2784854 | A1 | 01-10-2014 | CN | 104078699 A | 01-10-2014 |
| | | | EP | 2784854 A1 | 01-10-2014 |
| | | | EP | 3133679 A1 | 22-02-2017 |
| | | | JP | 5813800 B2 | 17-11-2015 |
| | | | JP | 2014209436 A | 06-11-2014 |
| | | | US | 2014295289 A1 | 02-10-2014 |

EPO FORM P0459

For more details about this annex : see Official Journal of the European Patent Office, No. 12/82